# EUROPEAN PATENT APPLICATION

(11) **EP 1 757 205 A1**
(43) Date of publication of application: **28.02.2007**
(21) Application number: 06254444.0
(22) Date of filing: 25.08.2006
(51) Int. Cl.: A47B 73/00, A47B 55/02, A47B 49/00, A47J 47/16, A47F 7/28, A47F 5/05, A47B 75/00

(54) **Single cup coffee container holder**

(30) Priority: 25.08.2005 US 213538
(71) Applicant: Nifty Home Products, Inc, Madison Lake, Minnesota 56063 (US)
(72) Inventor: Tiemann, Frank R., Madison Lake, Minnesota 56063 (US)
(74) Representative: Charig, Raymond Julian

(57) **Abstract**

A rack adapted to retain a plurality of beverage filter cartridges including a rotatable base member, a stand extending vertically from the rotatable base member, a plurality of spaced-apart hoop members encircling the stand, and a plurality of ring members coupled tangentially to the hoop members and extending from the hoop members at an oblique angle. The base member further includes a stationary segment and an inner plate. The inner plate is rotatably secured to the stationary segment, and the stand projects vertically from the inner plate such that when the inner plate rotates, so does the stand. The spaced-apart hoop members encircle the stand and are supported by parallel bars that extend the diameter of the hoop members. The parallel bars are secured to the stand at different positions along the axis of the stand. The ring members are sized to retain a beverage filter cartridge, wherein a rim of the bevarage filter cartridge bangs on the ring.

## Description

### FIELD OF THE INVENTION

This invention relates to a rack adapted to retain disposable single-serve beverage filter cartridges.

### DESCRIPTION OF THE PRIOR ART

In recent years, single-cup brewers have become popular in homes and offices. Singe-cup brewers brew fresh cups of coffee or tea in short periods of time.

A disposable single-serve beverage filter cartridge, such as the ones shown in U.S. Patent Nos. 5,325,765 and 5,840,189 (Sylvan et al,), dated respectively July 5, 1994 and November 24, 1998 are inserted into the brewer. During the brewing cycle, heated water is admitted into the cartridge for infusion with a beverage medium such as coffee grounds. All of the resulting brewed beverage is eventually poured into a waiting cup ready to be enjoyed.

Such disposable single-serve beverage filter cartridges generally have an outer container with a bottom and side walls extending upwardly from the bottom to a peripheral rim surrounding the upper opening. A filter element is dimensioned and positioned to subdivide the interior of the container into separate chambers. A beverage medium is stored in one chamber. The filter cartridge also includes a yieldably piercable lid to accommodate the inflow of hot liquid.

Such cartridges have rapidly gained widespread acceptance. The primary benefit of such cartridges is that they give the consumer a variety of flavors and brands of beverage mediums to choose from. For example, a consumer could brew herself a cup of breakfast blend coffee in the morning and a cup of green tea after lunch. Additionally, consumers would be able to mix and match the brand and blend of their choice.

However, because single-cup brewers give consumers so many options, cupboards and counters may become cluttered with different, unused beverage cartridges. Moreover, the label identifying the flavor and brand of the beverage medium is typically displayed on the outside surface of the lid. Therefore, stacking the containers on top of each other would cover the label and make it difficult for the consumer to choose the label of her choice. There is a need in the prior art for a rack which is easily accessible, can be stored in a variety of places and can hold and display a variety of single-serve beverage filter cartridges.

### SUMMARY OF THE INVENTION

In accordance with the present invention, a rack adapted to retain a plurality of beverage filter cartridges includes a rotatable base member, a vertical stand extending from the rotatable base member, a plurality of horizontally spaced-apart hoop members encircling the stand and a plurality of ring members tangentially coupled to the hoop members and extending downward at an oblique angle.

Typically, beverage filter cartridges have an outer container with a bottom, side walls extending upwardly from the bottom to a peripheral rim surrounding an upper opening.

In accordance with one embodiment of the invention, the base member has a stationary annular segment and an inner plate segment. Said stationary annular segment has a diameter larger than the diameter of the inner plate. Said inner plate is rotatably secured to the stationary annular segment. The vertical stand is secured to the inner plate such that when the inner plate is rotated, the stand rotates with it. The spaced-apart hoops encircle the stand and have two parallel bars extending the diameter of the hoops. The stand then extends between the parallel bars of each hoop at the center point of each hoop, and the parallel bars are secured to the stand at three different positions along the length of the stand. The hoops each have a plurality of tangentially coupled ring members. The ring members are each sized to retain a beverage filter cartridge wherein the container is inserted into the ring and the peripheral rim of the cartridge interferes with the ring so that the cartridge hangs in the ring. Because the rings attach to the hoop at an oblique angle, the labels on the lids of the cartridges are readily observed.

It is a first object of this invention to provide a rack for storing a plurality of beverage filter cartridges.

Another object of this invention is to display the brand or blend of the beverage medium of a plurality of beverage filter cartridges.

An additional object of the invention is to produce a compact, rotatable stand for storing a plurality of beverage filter cartridges.

### DESCRIPTION OF THE DRAWINGS

These and other objects, advantages and features of the invention will become apparent to person skilled in the art from the following detailed description of the preferred embodiment depicting the best mode contemplated for carrying out the invention. In the drawings, like numerals in the several views refer to corresponding parts.
FIG. 1 is a perspective view of the rack for holding beverage filter cartridges;
FIG, 2 is a bottom plan view of the rack;
FIG. 3 is a perspective view of the rack showing the beverage filter cartridges inserted therein; and

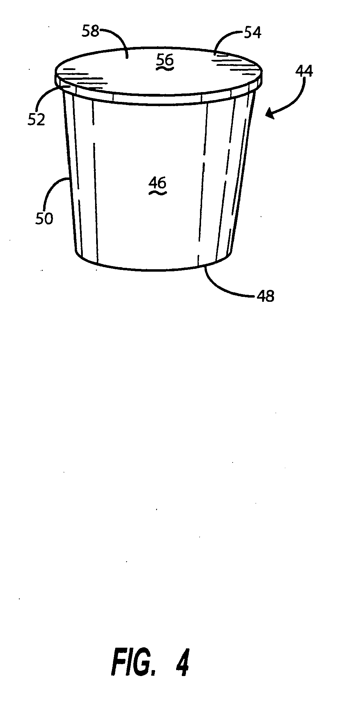

FIG. 4 is a perspective view of a prior art beverage filter cartridge.

### DETAILED DESCRIPTION

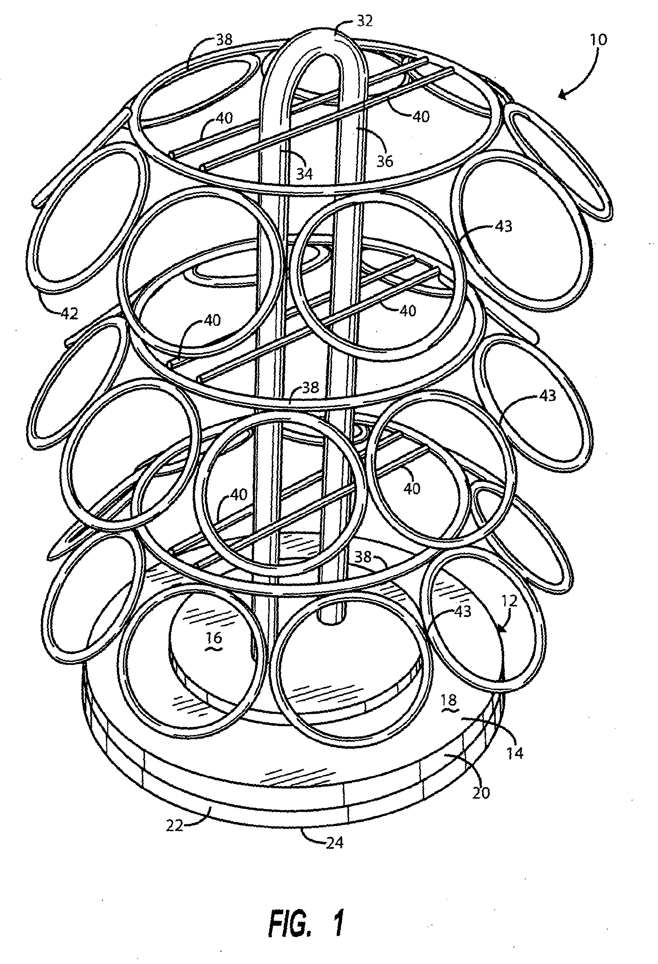

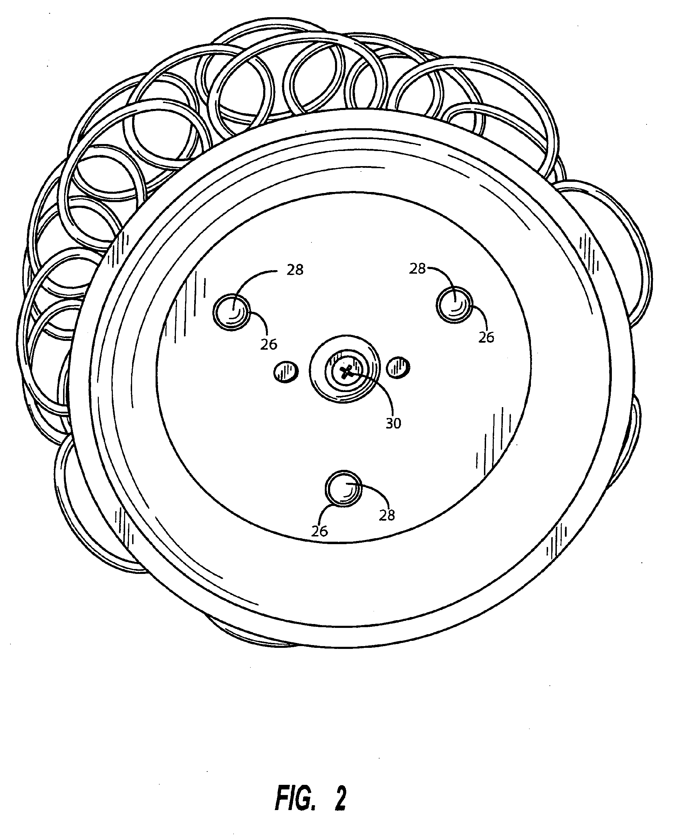

Referring now to the drawings, there is shown in the perspective view of Fig. 1 a rack designated generally as reference numeral 10 constructed in accordance with one embodiment of the present invention. The rack 10 is constructed of metal with chrome plating. By way of example only, it may have an overall width of approximately 7 3/8 inches and overall height of approximately 10 inches. Because of its relatively compact size, the rack can easily fit in either a cupboard or on a kitchen counter. It is understood that the rack 10 may be formed of different sufficiently rigid materials, and may be sized differently to hold more or less beverage filter cartridges.

The rack 10 includes a base member 12 comprising a stationary segment 14 and a rotatably mounted inner plate 16. The stationary segment 14 is sized to support the rack 10 so that it does not easily tip when fully loaded with beverage filter cartridges. Typically, the stationary segment 14 may have a 6 inch diameter. The stationary segment 14 has a top surface 18 and a peripheral side wall 20 extending from the perimeter of the top surface 18. A plastic flange 22 surrounds the free edge 24 of the side wall 20. The flange protects the covered shelf or kitchen counter from being scratched by the base member 12 of the rack 10.

The inner plate 16 is disk-shaped, having a smaller diameter than that of the top of the surface 18 of the stationary segment 14. The inner plate 16 is journaled for rotation on the center of the top surface 18 of the stationary segment 14.

As shown in the bottom view of Fig: 2, the top surface 18 of the stationary segment 14 has a plurality of bearing pockets 26 formed therein. A ball bearing 28 rests in each bearing pocket 26. The bearings 28 are disposed between the top of the stationary segment 14 and the inner plate 16 to facilitate rotation of the inner plate 16 on the stationary annular segment 14 in turntable fashion. To ensure that the inner plate 16 rotates on an axis and does not fall off of the annular segment 14, a screw 30 passes through a screw aperture (not shown) and is coupled to a bottom surface (not shown) of the inner plate 16. The inner plate 16 thus rotates on the axis created by the screw 30.

Fig. 1 shows a stand 32 extending perpendicularly upward from the surface of the rotatable inner plate 16. In the preferred embodiment of the invention, the stand 32 comprises a u-shaped tube with first and second legs 34, 36. It is recognized that the stand 32 could be configured differently. For example, instead of a u-shaped tube, the stand 32 could be a single shaft, or could be a multi-pronged tube.

A plurality of spaced-apart wire hoops 38 encircle the stand 32 at different positions along the length of the stand 32. The hoops 38 are therefore perpendicular to the stand 32 and parallel with the base member 12 and to each other. In the preferred embodiment, each hoop 38 has a pair of bars 40 extending the diameter of the hoop 38 parallel to one another. The bars 40 are preferably spot welded to the legs of the stand and to the hoops at opposed end. A person of ordinary skill in the art recognizes that the hoops 38 can be secured and positioned on the stand 32 using different means, such as specially designed plastic clips.

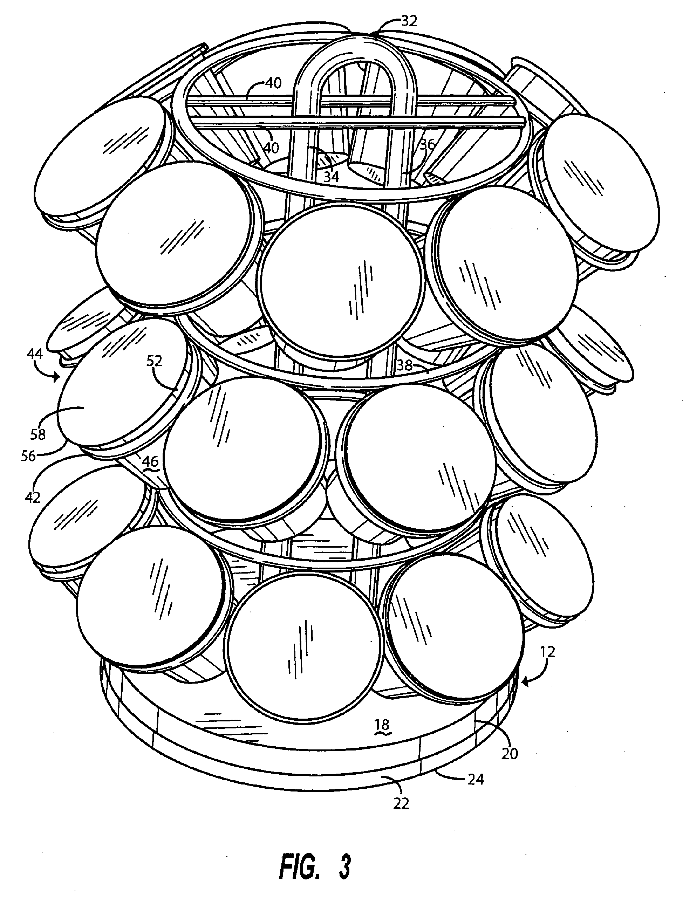

Affixed along the circumference of the hoops 38 are a plurality of ring members 42. The rings are tangentially joined to the hoops 38 and they extend obliquely therefrom. To facilitate display of the beverage filter cartridges 44, in the preferred embodiment, the ring members 42 depend from the hoops 38 at about a 45 degree angle to the horizontal. The ring members 42 are sized so that eight such rings will tangentially attach to each hoop with adjacent rings also being spot welded to each other as at 43. Each ring member 42 is also sized to retain a single beverage filter cartridge 44 as shown in Figure 3.

The typical beverage filter cartridge 44 has a fresto-conical container 46 with a closed bottom 48, a side wall 50 extending from the bottom 48 and a peripheral rim 52 surrounding an upper opening 54. A beverage medium, e.g. coffee grounds, is contained in the beverage filter cartridge 44. A lid 56 covers th opening 54. The brand and blend of the beverage medium can be printed on the outside surface 58 of the lid 56. The rings 42 are sized to allow the container 46 to be inserted through the opening of the rings 42 and catch the peripheral rim 52 on the rings 42. The beverage filter cartridge 44 hangs on the rings 42 by its peripheral rim 52 with the bottom 48 facing the stand 32 at an angle. The lid 56 faces outward from the rack 10. Because the stand 32 is positioned on the inner plate 16, the stand can be rotated, and along with it, the beverage filter cartridges 44.

This invention has been described herein in considerable detail in order to comply with the patent statutes and to provide those skilled in the art with information needed to apply the novel principles and to construct and use such specialized components as required. However, it is to be understood that the invention can be carried out by specifically different equipment and devices, and that various modifications, both as to structure and equipment, can be accomplished without departing from the scope of the invention itself.

## Claims

1. A rack for storing beverage filter cartridges, said beverage filter cartridges having an outer container with a bottom, and side wails extending upwardly from the bottom to a peripheral rim surrounding an upper opening, the rack comprising:
a) a rotatable base member;
b) a stand of a predetermined length extending perpendicularly from the base member;
c) a plurality of spaced-apart hoop members encircling the stand at different positions along the length of the stand; and
d) a plurality of rings tangentially coupled to each hoop member and extending from the hoop member at an oblique angle, said rings also being in tangent with one another, the rings sized to retain said beverage filter cartridge therein by suspending the beverage filter cartridges from the rings by the peripheral rim of the beverage filter cartridges.

2. The rack in claim 1 wherein the rotatable base member includes
a) a stationary segment having a top surface and a side wall extending from a perimeter of the top surface, said side wall having a free edge opposite the perimeter of the top surface; and
b) an inner plate journaled for rotation on the top surface of the stationary segment wherein the stand extends perpendicularly from the inner plate.

3. The rack in claim 2 wherein a plastic flange surrounds the free edge of the side wall to eliminate scratching of a surface on which the rack is placed.

4. The rack in claim 2 wherein the top surface of the stationary annular segment further includes:
a) a plurality of bearing pockets;
b) a plurality of bearings disposed individually in the bearing pockets; and
c) an axle member extending from the stationary segment to the inner plate wherein the inner plate rotates on the axle and the plurality of bearings reduces friction between the inner plate and the stationary annular segment as the inner plate rotates on the stationary annular segment.

5. The rack in claim 1 wherein the stand is a u-shaped tube having first and second legs.

6. The rack in claim 1 wherein the hoop members each include first and second parallel bars spanning the diameter of the hoop member and wherein the stand is disposed in between the first and second parallel bars and the first and second parallel bars are spot welded to the stand.
